Europäisches Patentamt

European Patent Office

Office européen des brevets

(11) Publication number: **0 331 339**
**A1**

# EUROPEAN PATENT APPLICATION

(21) Application number: 89301719.4

(51) Int. Cl.⁴: **G01D 5/24 , G01C 9/08**

(22) Date of filing: 22.02.89

(30) Priority: 04.03.88 GB 8805266

(43) Date of publication of application:
06.09.89 Bulletin 89/36

(84) Designated Contracting States:
**DE FR IT NL**

(71) Applicant: **THE MARCONI COMPANY LIMITED**
**The Grove Warren Lane**
**Stanmore Middlesex HA7 4LY(GB)**

(72) Inventor: **Cope, Paul Edward George**
**6 Crest Close**
**Fareham, PO16 BRZ(GB)**

(74) Representative: **MacKenzie, Ian Alastair**
**Robert**
**The General Electric Company, p.l.c. Central**
**Patent Department Wembley Office Hirst**
**Research Center East Lane**
**Wembley Middlesex HA9 7PP(GB)**

(54) **Angular displacement sensor.**

(57) The invention concerns an Angular Displacement Sensor comprising a vane (11) pivotable within a liquid filled container (10). Electric means (17, 18, 19) act as electric spring to restrain movement of the vane in response to a feedback control signal generated by sensors (13, 14). The natural frequency of the sensor is lowered by diminishing the electric spring constant and the problem of small torques overriding the electric spring is overcome by the introduction of integral control action in the operation of the electric spring effectively to cancel any steady torque acting on the vane.

Fig.1.

## ANGULAR DISPLACEMENT SENSOR.

The present invention concerns angular displacement sensors. These devices provide a short term measure of angular motion and have a number of different applications. For example they have been used for the correction of camera shake effects in cameras carried in remote sensing satellites.

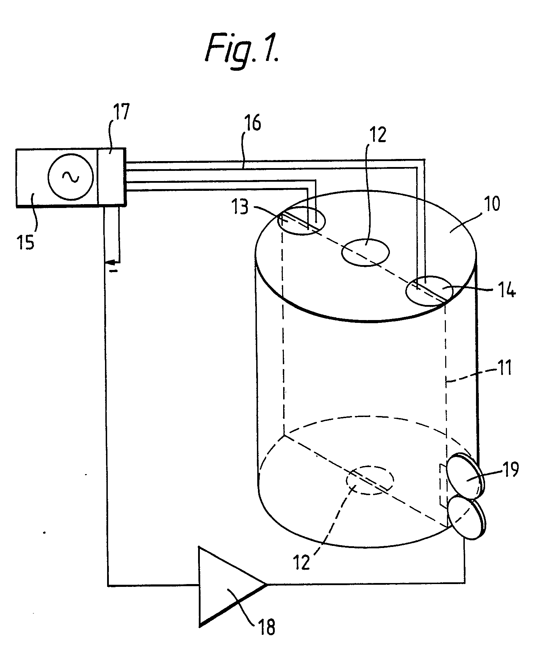

Figure 1 of the accompanying drawings shows a perspective view of one of the best known of such sensors and one that has been in use for several years.

As shown in Figure 1 the sensor comprises an axially symmetric container 10 in the form of a cylinder. The container houses a suitable fluid which is free to rotate within container 10 abouts its axis of symmetry. Immersed in the fluid is a light,neutrally buoyant vane 11 mounted close to but out of contact with the inner wall of container 10. The vane 11 can rotate about the axis of cylinder 10 by means of bearings 12 which are designed to apply the minimum of friction to the vane. The position of vane 11 is measured by means of capacitive pick-off sensors 13, 14 fed by an excitation oscillator 15. The sensors 13, 14 are arranged to be diametrically opposite one another and are so connected that signals due to translational movements of vane 11 subtract and signals due to rotational movement add at the output, the signals being carried by lines generally indicated at 16. A demodulator 17 converts the incoming capacitor sensing signals to base band. This signal is used to maintain the average position of vane 11 in container 10 by applying a feedback signal via a torquer driver 18 to a torquer 19 which can be considered as an electrical spring. The effect of this known system is to give the sensor a low frequency cut off in the region of 1 to 3 HZ. Down to this frequency the Noise Equivalent angular rate (hereinafter referred to as NER), which measures the precision by comparison with a gyroscope, decreases with frequency at 20 dB/decade. However, below this frequency the NER increases at 20dB/decade and this confines the utility of the sensor to the region around the natural frequency.

Angular displacement sensors of this kind are fully described in for example, United States Patent Specification Nos. 3974699, 4053849 and 3967064.

It will be appreciated that the utility of a sensor of this type will be improved if lower natural frequencies could be used since the NER improves at 20dB/decade as this frequency is lowered. This method of improving the sensor's response has in fact been suggested but has been deemed as being impractical because of the tendency of small torques to cause the sensor to override the electric spring causing vane 11 to rest against its limit stops so rendering the sensor useless.

The present invention has for an object to enable the natural frequency of an angular displacement sensor effectively to be reduced.

Accordingly the present invention consists in an angular displacement sensor comprising a vane pivotable within a liquid-filled container, electric means for restraining movement of the vane by acting as an electric spring and sensing means for detecting angular movement of the vane and for applying a feedback control signal to the electric restraining means, and wherein the natural frequency of the sensor is lowered by diminishing the electric spring constant, the problem of small torques overriding the electric restraining means being overcome by the introduction of integral control action in the operation of the electric restraining means effectively to cancel any steady torque acting on the vane.

In accordance with a feature of the invention means are provided for mitigating performance limitations arising from the effects on the vane of residual positive or negative stiffness by adjusting the constant of said electrical restraining means in association with said integral control action.

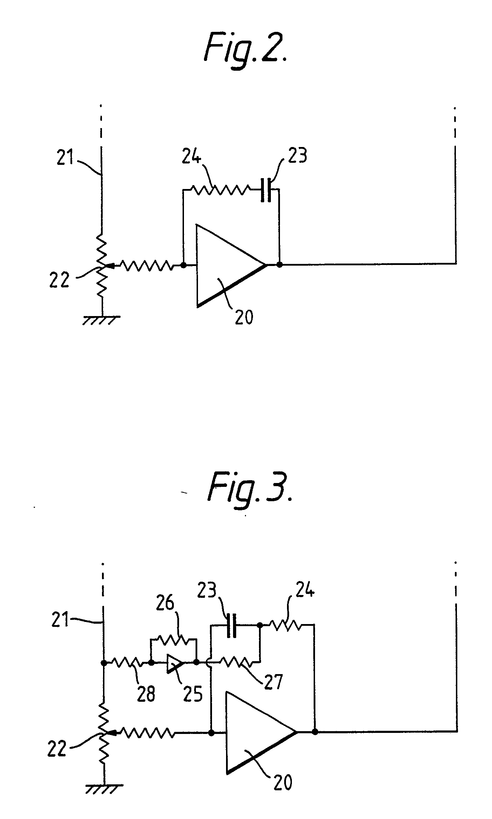

In order that the present invention may be more readily understood, an embodiment thereof will now be described by way of example and with reference to Figures 2 and 3 of the accompanying drawings, in which figure 2 is a circuit diagram of a torquer driver according to the invention and for use with an angular displacement sensor of the type described with reference to Figure 1 of the drawings and Figure 3 is a modification of the torquer driver shown in Figure 2 circuit diagram.

Referring now to Figure 2, this shows an operational amplifier 20 intended to receive the feedback signal from the demodulator 17 shown in Figure 1 which is supplied via a Line 21. The signal on line 21 is tapped via a potentiometer 22 and the amplifier 20 is provided with a feedback loop consisting of a capacitor 23 and a resistance 24. This arrangement provides integral control of the feed back loop to the torquer device 18 and ensures that any steady torque within the angular displacement sensor which might lead to disturbance of the vane 11's mean position is automatically nullified. The proportional term in the gain, effectively the electric spring constant, can then be set using potentiometer 22 or some other suitable adjustable factor. In this way the effective natural frequency of the sensor can be set as low as necessary for the sensor to meet whatever performance requirements which may arise.

The circuit arrangement described can bring about a substantial reduction in the natural frequency of the angular displacement sensor. However, this may give rise to the situation in which further improvement in the performance of the sensor is impeded by the presence of a natural positive or negative stiffness acting on vane 11. Positive stiffness is exemplified by an object which springs back when it has been displaced. An article with negative stiffness will continue with its movement once displaced. An example of this would be a flap pivoted at its base which is in balance when absolutely vertical but which falls as soon as it is moved. An article with zero stiffness remains in whichever position it has been moved into. For example a capacitive pick-off gives rise to a small electrostatic attraction between the pick-off electrodes which varies as the inverse square of the separation. Even with a symmetrical arrangement of the electrodes a second order term amounting to a negative stiffness remains to affect vane 11. The presence of such a negative stiffness will give the effect that zero natural frequency is reached before potentiometer 22 has reached the zero gain setting. Decrease of gain beyond this point will result in instability. Negative stiffness does not affect the utility of the sensor provided that potentiometer 22 is still adjusted to give a small positive stiffness and that the negative stiffness remains constant. Where the residual effect amounts to a positive stiffness then a fixed, small positive feedback electric spring term can be superimposed on the main feedback signal to convert the residual effect into a negative stiffness which can then be treated as above.

One way in which this can be done is shown in figure 3 of the accompanying drawings. In this figure the positions of capacitor 23 and resistor 24 have been reversed. This does not affect their function. In addition an operational amplifier 25 with a feed back resistor 26 is connected between line 21 and the junction between resistor 24 and capacitor 23. Additional resistors are shown at 27 and 28.

It will be appreciated that whatever natural frequency is required and achieved in an angular displacement sensor using the above circuit it is important to observe that the break-in frequency for the integral control is kept lower than the natural frequency by a factor of about 2:1. The break-in frequency is defined by the time constant of capacitor 23 and resistor 24. This requirement prevents the situation in which an attempt is made to set potentiometer 22 such that the natural frequency of the sensor is zero which would theoretically give an infinitely good low frequency NER performance.

## Claims

1. An angular displacement sensor comprising a vane (11) pivotable within a liquid-filled container (10), electric means (18/19) for restraining movement of the vane by acting as an electric spring, and sensing means (13, 14) for detecting angular movement of the vane (11) and for applying a feedback control signal to the electric restraining means, and characterised in that means (20, 23,24) are provided for lowering the natural frequency of the sensor which comprise means for generating an integral control action in the operation of the electric restraining means (18, 19) effectively to cancel any steady torque acting on the vane.

2. A sensor as claimed in Claim 1, and further characterised in that it includes means (15. 26) for mitigating performance limitations arising from the effects on the vane of residual positive or negative stiffness by adjusting the constant of said electrical restraining means in association with said integral control action.

3. A sensor as claimed in Claim 1 or Claim 2, and further characterised in that in the electric restraining means comprise a demodulator (17) connected to the sensing means (13, 14) and in operation supplying a feed back signal to a torquer (19) for maintaining the average position of the vane.

4. A sensor as claimed in Claim 3 and further characterised in that the means for generating an integral control action comprise an operational amplifier (20) connected to the output of the demodular, the amplifier having a feed back loop consisting of a capacitor (23) and a resistance (24) and the arrangement ensuring that any steady torque within the angular displacement sensor which might lead to disturbance of the vane's mean position is automatically nullified.

5. A sensor as claimed in Claim 4, and further characterised in that the input to the operational amplifier (20) is tapped via a potentiometer (22) so that the proportional term in gain, and thus effectively the spring constant of the electric restraining means can be set by adjustment of the potentiometer.

# Fig.1.

EP 0 331 339 A1

## Fig.2.

## Fig.3.

| | DOCUMENTS CONSIDERED TO BE RELEVANT | | EP 89301719.4 |
|---|---|---|---|
| Category | Citation of document with indication, where appropriate, of relevant passages | Relevant to claim | CLASSIFICATION OF THE APPLICATION (Int. Cl.4) |
| D,Y | US - A - 3 974 699 (MORRIS)<br>* Fig. 22,23 *<br>-- | 1 | G 01 D 5/24<br>G 01 C 9/08 |
| Y | ELEKTRONIKSCHAU 2/86<br>H.SLIWA "Analoge Simulation stetiger Systeme mittels Operationsverstärker" pages 24,26,28,30<br>* Page 26; fig. 10 *<br>---- | 1 | |

TECHNICAL FIELDS
SEARCHED (Int. Cl.4)

G 01 C 9/00

G 01 D 5/00

G 01 R 1/00

The present search report has been drawn up for all claims

| Place of search | Date of completion of the search | Examiner |
|---|---|---|
| VIENNA | 31-05-1989 | KUNZE |